# EUROPEAN PATENT SPECIFICATION

(11) **EP 1 992 216 B1**
(45) Date of publication and mention of the grant of the patent: **05.12.2018**
(21) Application number: 07738051.7
(22) Date of filing: 08.03.2007
(51) Int. Cl.: A01G 7/04

(54) **METHOD FOR INDUCING AN EXPRESSION OF A DISEASE-RESISTANT GENE OF A PLANT**
VERFAHREN ZUM FÜHREN EINER EXPRESSION EINES KRANKHEITSRESISTENTEN GENS EINER PFLANZE
PROCÉDÉ POUR INDUIRE L'EXPRESSION D'UN GÈNE RÉSISTANT À UNE MALADIE D'UNE PLANTE

(30) Priority: 08.03.2006 JP 2006062453
(43) Date of publication of application: 19.11.2008
(73) Proprietor: Shikoku Research Institute Incorporated, Takamatsu-shi, Kagawa 761-0192 (JP); Shikoku Electric Power Company Incorporated, Takamatsu-shi, Kagawa 760-8573 (JP)
(72) Inventor: KUDO, Rika, Takamatsu-shi, Kagawa 761-0192 (JP); ISHIDA, Yutaka, Takamatsu-shi, Kagawa 761-0192 (JP); YAMAMOTO, Keiji, Takamatsu-shi, Kagawa 761-0192 (JP); KAKIBUCHI, Kazumasa, Takamatsu-shi, Kagawa 761-0192 (JP); SUEKANE, Ayako, Takamatsu-shi, Kagawa 761-0192 (JP)
(74) Representative: Pfenning, Meinig & Partner mbB
(86) International application number: PCT/JP2007/054561
(87) International publication number: WO 2007/105599

(56) References cited:
- EP-A1- 1 269 830
- JP-A- 06 276 858
- JP-A- 09 266 725
- JP-A- 10 000 022
- JP-A- 58 063 330
- JP-A- 62 000 408
- JP-A- 2004 166 638
- JP-A- 2005 216 572
- KURATA M.: 'Haiiro Kabibyokin no Bunseihoshi no Keisei Yuki oyobi Keisei Sogai ni Oyobosu Koshitsu no Eikyo' KOCHI-KEN NORIN GIJUTSU KENKYUSHO KENKYU HOKOKU no. 18, 1986, pages 1 - 7, XP003017777
- STANISLAW KARPINSKI ET AL: "Light perception in plant disease defence signalling", CURRENT OPINION IN PLANT BIOLOGY, vol. 6, no. 4, 1 August 2003 (2003-08-01), pages 390-396, XP055308405, GB ISSN: 1369-5266, DOI: 10.1016/S1369-5266(03)00061-X
- K. M. FOLTA: "Green Light Stimulates Early Stem Elongation, Antagonizing Light-Mediated Growth Inhibition", PLANT PHYSIOLOGY, vol. 135, no. 3, 9 July 2004 (2004-07-09), pages 1407-1416, XP055345722, Rockville, Md, USA ISSN: 0032-0889, DOI: 10.1104/pp.104.038893
- Hyeon-Hye Kim ET AL: "Green-light Supplementation for Enhanced Lettuce Growth under Red- and Blue-light-emitting Diodes", HortScience, 1 December 2004 (2004-12-01), pages 1617-1622, XP055345726, United States Retrieved from the Internet: URL:http://hortsci.ashspublications.org/co ntent/39/7/1617.full.pdf+html [retrieved on 2017-02-14]

## Description

### Technical Field

The present invention relates to a control method for inducing an expression of a disease-resistant gene of a plant.

### Background Art

Plant disease control measures in cultivation of agricultural products which aim for securing yields of the agricultural products and maintaining and improving the quality are one of the most important processes in cultivation control. As a method for plant disease control, a control method using pesticide agents has been most widely applied (refer to Patent Document 1).

Many conventional pesticide agents directly target plant pathogens, such as filamentous bacteria, bacteria, viruses, and viroids, and insect pests. Since different active components in such agents show effects for different target pathogens and insect pests, these agents are used preventatively or are selected after inference of what disease is involved based on observation of developed symptoms in the present circumstances. Accordingly, if an appropriate agent is not selected on the basis of accurate disease diagnosis, the control effect is decreased, resulting in an increase in the number of agent applications.

Furthermore, when a single agent is applied, pathogens and insect pests develop resistance against the agent. Accordingly, a multiple kinds of agents are used. As a result, there arises a problem of an impact of toxicity of the agents to the human body and the ambient environment. For this reason, probenazole, acibenzolar-S-methyl or the like has been used as a chemical substance which activates the intrinsic biological defense mechanism of a plant so as to induce disease resistance in the whole plant. Induction of systemic disease resistance by activation of the intrinsic biological defense mechanism in a plant is called Systemic Acquired Resistance (SAR).

Induction of systemic acquired resistance principally refers to a phenomenon in which, when some kind of stress is applied to a part of a plant, new resistance against the stress is induced in the whole plant body while the information on the stress reaches the whole body. The detailed mechanism of the systemic acquired resistance induction has not been revealed. However, it is generally considered that a plant acquires disease resistance by firstly recognizing a plant pathogen or an elicitor substance (a general term for substances which induce biological defense reactions of a plant by activating the secondary metabolic system therein); and then by generating active oxygen and causing signal transduction involving salicylic acid, spermine and the like to generate a PR protein (an infection-specific protein) or the like.

Commonly-used systemic acquired resistance inducers, such as probenazole, are considered to induce this reaction. In the meantime, it is known that, in the case where a plant receives stress such as injury, a signal transduction involving jasmonic acid, ethylene, and the like occurs, which improves not only disease resistance but also insect pest resistance, fruit ripening, flowering promotion, dormancy breaking, germination control, and stress resistance against dryness, low temperature, and the like.

As a pesticide agent utilizing induction of systemic acquired resistance in a plant, probenazole has been put into practical use, and has an extremely large market scale of inhibitor agents for rice blast disease. However, these pesticide agents have a small application range other than rice blast disease. Accordingly, development of an effective product of the next generation is desired. In the meantime, a jasmonic acid derivative and an ethylene preparation have also been utilized for the purpose of fruit ripening and flowing promotion. However, the range of their effects is limited.

Moreover, in addition to complexity of the secondary metabolic system in a plant, activation of the enzymes occurs in a short period of time. Accordingly, very little of the mechanism regarding activation of the plant protection system involving elicitors has been revealed.

On the other hand, there have been attempts to sterilize pathogens by using light, especially using ultraviolet light, and to induce resistance by using red light. However, it has been reported that resistance in a plant is decreased by ultraviolet light. Accordingly, there are many unconfirmed points regarding the mechanism and effects. Furthermore, growth inhibition by ultraviolet light and effects by red light, such as succulent growth of leaves and stems and inhibition of flower bud differentiation, have also been reported. Therefore, it is considered that, even if a control effect can be obtained by these lights, their practical use would be difficult.
Patent Document1: Japanese Patent Application Publication 2001-294581
Patent Document 2: Japanese Patent Application Publication 2005-328702

### Disclosure of the Invention

### Problems to be Solved by the Invention

In recent years, an issue of heat-loving plant diseases which have occurred mainly in a range from warm to subtropical zones has become complicated by occurrence of these diseases all over Japan due to global warming. Accordingly, measures for plant diseases have become more difficult year after year. As measures for plant disease in cultivation of agricultural products, a control method using pesticide agents has been conventionally adopted.

However, control using pesticide agents requires several times of applications during cultivation. Accordingly, while the producers incur labor and financial burden involved in the applications, there are problems of environmental contamination affecting the cultivation area and its vicinity and of safety for the human body. Furthermore, it has been recently pointed out how residual pesticide agents on agricultural products affect the human body. Accordingly, a demand for pesticide-free agriculture or agriculture using less pesticide agents is becoming increasingly stronger.

KURATA M: "Haiiro Kabibyokin no Bunseihoshi no Keisei Yuki oyobi Keisei Sogai ni Oyobosu Koshitsu no Eikyo - Action Spectrum for Photoinduced Conidial Formation and Inhibition in Botrytis cinerea", BULLETIN OF THE KOCHI PREFECTURAL INSTITUTE OF AGRICULTURAL AND FOREST SCIENCE, INO, KOCHI, JP, no. 18, 1 January 1986, pages 1-7, ISSN: 0386-6181, discloses an effect of light quality on induction and inhibition of conidial formation in gray mold fungus.

JP 06 276858 A describes a lighting device for growing a plant by irradiating the plant in a closed space with artificial light so that the plant is alternately irradiated with green light at a wavelength in a range from 500-570 nm and white light at a wavelength in a range from 300-800 nm, and the time of irradiating with the green light is shorter than that with the white light.

EP 1 269 830 A1 discloses a device for illuminating plants intermittently or with light varying in intensity.

Other methods of treating a plant by irradiating the plant with green light are disclosed in K. M. FOLTA: "Green Light Stimulates Early Stern Elongation, Antagonizing Light-Mediated Growth Inhibitaion", PLANT PHYSILOLGY, vol. 135, no. 3, 9 July 2004, pages 1407-1416, ISSN: 0032-0889, and KIM HYEON-HYE et al., "Green-light Supplementation for Enhanced Lettuce Growth under Red- and Blue-light-emitting Doiodes", HortScience, 1 December 2004, pages 1617-1622.

The fact that light-sensing and light-acclimatory processes also govern pathogen defence pathways is known from S. KARPINSKI et al.: "Light perception in plant disease defence signalling", CURRENT OPINION IN PLANT BIOLOGY, vol. 6, no. 4,1 August 2003, pages 390-396, ISSN: 1369-5266.

An object of the present invention is to provide a plant disease control method and a control device which are capable of enhancing disease resistance in a plant and thereby reducing an amount of pesticide agents to be used.

### Means for Solving the Problems

In order to achieve the above object, a method for inducing an expression of a disease resistant gene of a plant according to the present invention comprises the features of claim 1. Preferred embodiments of this method may show the features of the dependent claims.

### Effects of the Invention

According to the present invention, which enhances disease resistance of a plant by irradiating a light beam to the plant, it is possible to dramatically reduce an amount of pesticide agents to be used. In addition, without causing adverse effects on the human body, environmental contamination can also be prevented.

### Brief Description of the Drawings

FIG. 1 is an explanatory view showing the relationship between an expression level of a disease resistant gene, which was analyzed by Northern blotting, and color of an irradiated light.
FIG. 2 is an explanatory view showing synthesis of jasmonic acid and related enzymes.
FIG. 3 is a graph showing the relationship between a period of time for irradiation and a gene expression level.
FIG. 4 is a graph showing the relationship between an elapsed time after irradiation and a gene expression level.
FIG. 5 is a table showing the relationship between development of grey mold disease and light irradiation.
FIG. 6 is a graph showing an effect of light intensity on the expression of a disease resistant gene.
FIG. 7 is a graph showing an effect of pulsed irradiation on the expression of a disease resistant gene.
FIG. 8 is a graph showing an inhibitory effect on strawberry anthracnose by green light irradiation.
FIG. 9 is a graph showing an inhibitory effect on cucumber anthracnose by green light irradiation.
FIG. 10 is a graph showing an effect of a period of time for irradiation on occurrence of cucumber anthracnose.
FIG. 11 is a graph showing an effect of a pulsed irradiation on occurrence of cucumber anthracnose.
FIG. 12 is a graph showing an effect of a time of pulsed irradiation on the number of lesions of cucumber anthracnose.
FIG. 13 is a block view illustrating a configuration of a control device.
FIG. 14A is a front view schematically showing the enclosed-type seedling raising chamber for illustrating an example of application of a fixed control device to an enclosed-type seedling raising facility.
FIG. 14B is a lateral view schematically showing the enclosed-type seedling raising facility for illustrating the example of application of the fixed control device to the enclosed-type seedling raising facility.
FIG. 15A is a front view schematically showing the seedling raising facility, for illustrating an example of application of a fixed control device to a seedling raising facility.
FIG. 15B is a lateral view schematically showing the seedling raising facility, for illustrating the example of application of the fixed control device to the seedling raising facility.
FIG. 16A is a front view schematically showing the facility, for illustrating an example of application of a fixed control device to a protected horticulture.
FIG. 16B is a lateral view schematically showing the facility, for illustrating the example of application of the fixed control device to the protected horticulture.
FIG. 17A is a front view schematically showing the open field, for illustrating an example of application of a fixed control device to open-field culture.
FIG. 17B is a lateral view schematically showing the open field, for illustrating the example of application of the fixed control device to open-field culture.
FIG. 18A is a lateral view schematically showing the mobile control device, for illustrating an example of application of a mobile control device.
FIG. 18B is a front view schematically showing the mobile control device, for illustrating the example of application of the mobile control device.
FIG. 19 is a diagrammatic view showing patterns of pulsed irradiation, intermittent irradiation, and intermittent pulsed irradiation.

### Best Mode for Carrying Out the Invention

In the present invention, "plant" refers to ones recognizable from the term plant itself, including vegetables, fruit, fruit trees, grains, seeds, bulbs, flowering grasses, herbs, and taxonomic plants, and the like.

Induction of systemic disease resistance by activation of the intrinsic biological defense mechanism in a plant is called systemic acquired resistance. Induction of systemic acquired resistance principally refers to a phenomenon in which, when some kind of stress is applied to a part of a plant, new resistance against the stress is induced in the whole plant body while the information of the stress reaches the whole body. In the present invention, discovered is an effect of green light which induces disease resistance in a plant, and this is a completely new phenomenon by irradiation with green light.

Under the circumstances in which effects of conventional pesticide agents on the human body and the environment have been strongly pointed out, the present invention is an invention which is possibly capable of dramatically reducing an amount of pesticide agents to be used. To be more specific, it is a phenomenon in which green light on a plant induces expression of a resistant gene therein, and then various proteins which confer disease resistance to the plant body are created, and it is a basically-important research achievement which can be widely applicable to plant activity enhancement methods and other eco-friendly control methods.

In Examples of the present invention, a possibility in that expression of a pathogen- and stress-responsive gene group in a plant was induced by irradiation with green light so that resistance enhancement to pathogens and disease damage was promoted was indicated.

The present invention utilizes light irradiation having an effect of enhancing disease resistance in a plant, that is, irradiation with green light in a wavelength range from 480 nm to 580 nm, more preferably, from 500 nm to 560 nm. A plant is irradiated with the green light in these wavelength ranges at night or in a combination of solar light.

As for a part to be irradiated in a plant in the present invention, which does not fall under the scope of the claims, either a part of the plant or the whole plant body may be a target to be irradiated with green light. As long as a part of a plant body is irradiated with green light, induction of disease resistance is initiated at the irradiated part, and the induced disease resistance spreads from the part of the plant body to the whole plant body.

As for a period of time for irradiation to a plant in the present invention, when irradiation with green light is performed for approximately 1 to 3 hours, disease resistance can be maintained after 12 hours.

As for an irradiation method to a plant in the present invention, various methods can be adopted. For example, listed are methods of irradiation of a plant in a protected culture or a plant in an open-field culture, irradiation of a plant in hydroponic culture or a plant in soil culture, irradiation of a seedling or a grafted seedling in raising seedling, irradiation of a plant in a tissue culture incubator, irradiation of a naturalized plant from a tissue culture seedling, and irradiation in postharvest storage of agricultural products.

As for a light source to be used, various kinds of light sources can be used as well. For example, in the case of directly using an artificial light source, listed are a light emitting diode (LED), a fluorescent tube, a cold-cathode tube, an arc lamp, a neon tube, electroluminescence (EL), an electrodeless discharge tube, an electrical bulb, a laser light, lights by chemical reactions, such as phosphorescence and fluorescence, and the like. Furthermore, it is not limited to irradiation using an artificial light source, and a light source may be anything as long as it can selectively emit green light using solar light.

For example, listed are materials such as a colored film, a permeable film, a polarizing filter, a permeable material, glass, and the like, which are capable of exhibiting green light. As for an irradiation method, listed are an irradiation method in which the whole plant body is evenly irradiated, an irradiation method for irradiating a base part of a plant, an irradiation method in which plants are irradiated sequentially with the use of a mobile light source, an irradiation method utilizing a reflection light in a mirror-ball system, and the like, and any can be selected according to how and where the plant is cultured.

A target plant in the present invention may be any plant as long as it recognizes irradiation with green light as stress, activates a resistant gene group against the stress, and exhibits an effect of promoting an increase of resistance against pathogens and diseases. Resistance-related genes whose expression was induced by irradiation with green light in Examples are genes involved in a common plant defense system among a wide range of plant species. The fact that the gene analysis result observed in a tomato plant exhibits a similar effect in other plants was confirmed in experimental systems in Examples using a cucumber seedling and grey mold fungus and anthracnose fungus and using a strawberry seedling and anthracnose fungus.

As for a plant in which induction of disease resistance by light irradiation of the present invention is expected, listed fruit vegetables are cucumber, pumpkin, watermelon, melon, tomato, eggplant, green pepper, strawberry, okra, string bean, fava bean, pea, soy bean, and the like.

Listed leaf vegetables are Chinese cabbage, green leaves for salting, qing-geng-cai, cabbage, cauliflower, broccoli, brussel sprout, onion, green onion, garlic, Allium chinense, Chinese leek, asparagus, lettuce, butter lettuce, celery, spinach, garland chrysanthemum, parsley, Japanese honewort, Japanese parsley, udo, Japanese ginger, Japanese butterbur, Japanese basil, and the like.

Listed root vegetables are Japanese radish, turnip, burdock root, carrot, potato, aroid, sweet potato, yarn, ginger, lotus root, and the like. In addition, the present invention is also applicable to rice plant, barley plants, corn, feed crops, flowers and ornamental plants, fruit trees, and timber trees, and the like.

A green-light LED used in the following tests has a bandwidth in a range from 500 to 560 nm.

### [Test 1]

An effect of light irradiation on the expression of a gene involved in disease resistance induction was investigated using a tomato seedling.

### [Materials and methods]

### (Materials)

As for a sample tomato variety, a *Momotaro* 8 variety (Takii Seed Co., Ltd.) was used. Seeds were sowed in a propagation medium (Zen-noh, Yosaku), and a true leaf of a two-week old seedling was used.

### (Test conditions)

A tomato seedling was transferred into a constant-temperature unit set to a room temperature of 25°C, and light irradiation was performed on the tomato seedling using LED light sources (blue, green, yellow, and red). The number of LED lamps was 360 for each of the light sources, and the whole plant body was evenly irradiated from 1 cm above the top of the plant body.

### (RNA extraction)

A tomato leaf was ground in liquid nitrogen using a pestle and a mortar immediately after the treatment. For RNA extraction from a ground tissue powder, an RNeasy Mini Kits (QIAGEN) was used.

### (Northern blot analysis)

For Northern blot analysis, a PCR product including a T7 promoter region was amplified using a primer set 60F/260Rv+T7 (5'-TCAACCTAGTACGAGAGGAACCG-3'/ 5'-TAATACGACTCACTATAGGGAACGACACGTGCCCTTGG-3') targeting 25S rRNA and a primer set 501F/1301Rv+T7 (5'-TTCGTATCTCGACCCATCTGAA-3'/ 5'-TAATACGACTCACTATAGGGGGTTGGTACCCGAATAGGATTTC-3') targeting AOS, and an RNA probe labeled by using a Dig RNA labeling kit (SP6/T7) (Roche) was used.

An RNA sample was prepared by well mixing 10 µg of total DNA (2 µg of 25S rRNA), 1 µl of a 20x MOPS, 3.5 µl of 37% (v/v) formaldehyde, and 10 µl of formaldehyde, and adjusted the total volume to 20 µl by adding water. The prepared sample was denatured by heating at 65 °C for 10 minutes, and applied to electrophoresis at 100 V for 40 minutes using a denaturing agarose gel containing formaldehyde immediately after addition of 2 µl of a 10× dye solution.

After the electrophoresis, the gel was washed twice for 15 minutes in a 10× SSC, and the RNA was transferred to a Hybond-N+ membrane (Amersham Biosciences) by a capillary method. After the transfer, the RNA was fixed by leaving the membrane stand still at 80 °C for 2 hours. The membrane after having been subjected to determination of the RNA level by methylene blue staining was placed in a hybridization bag, and subjected to prehybridization at 68°C for more than 3 hours in an approximately 10 ml of a Northern blot hybridization buffer (5x SSC, 0.1% (w/v) N-lauroyl sarcosine, 0.02% (w/v) SDS, 2% blocking agent, and 50% (v/v) formamide).

After the prehybridization, the RNA probe was denatured by boiling for approximately 10 minutes, and added to the hybridization buffer. Thereafter, the membrane was shaken at 68°C overnight for hybridization. After the hybridization, the membrane was washed twice with a wash buffer 1 (2x SSC, 0.1% SDS) for 5 minutes and twice with a wash buffer 2 (0.5× SSC, 0.1% SDS)

(68°C) for 15 minutes. Thereafter, the membrane was lightly washed with a maleic acid buffer (0.15 M NaCl, 0.1 M maleic acid) containing Tween 20, and then subjected to blocking in a blocking buffer (the maleic acid buffer, 1× blocking buffer) for more than 1 hour.

After the blocking, the membrane was washed three times with the maleic acid buffer containing Tween 20 for 15 minutes. Signal detection was carried out by a chromogenic reaction using NBT/BCIP.

### [Results and Discussion]

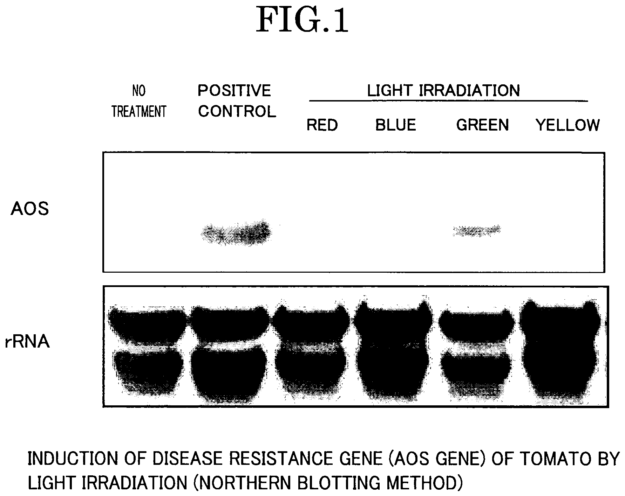

As a result of the investigation of an expression level of disease resistance in the case of irradiating a tomato seedling with LED light sources (blue, green, yellow, red, and far red) using the above-described analysis technique, it was found as shown in FIG. 1 that expression of an allene oxide synthase (AOS) gene, which is one of typical genes deeply involved in disease resistance, was specifically induced only by irradiation with green light.

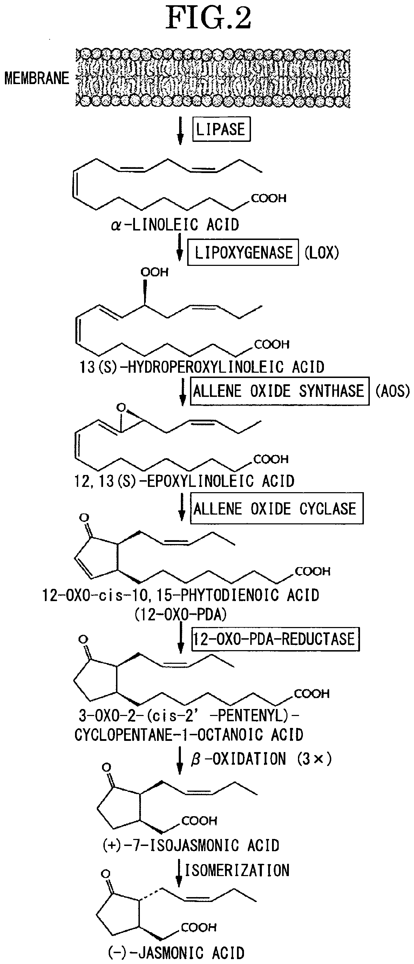

AOS is an enzyme which is, along with lipoxygenase (LOX), involved in a lipid peroxidation pathway, and, as shown in FIG. 2, plays an important role in biosynthesis of jasmonic acid which is known to be deeply involved in induction of disease resistance.

It is known in a plant that this lipid peroxidation pathway is activated in a quite early stage by stress, such as a pathogen and injury, and, as a result, signal transducers, such as jasmonic acid and salicylic acid, are synthesized, and a defense mechanism is activated. The fact that the AOS gene was activated by irradiation with green light indicates that recognition of green light by tomato led to activation of a stress-responsive reaction pathway. The present result suggests the possibility that irradiation with green light activates a pathogen- and stress-responsive gene pathway in a plant and promotes an increase in resistance against pathogens and diseases.

Green light is considered to be difficult to use for a photosynthetic reaction and the like in plants. To be more specific, plants are green because they reflect unnecessary green light or allow it to go through them. Therefore, being continuously irradiated with green light as a monochromatic light is considered to be a stressful state for a plant. In addition, all the resistance-related genes whose expression was induced by irradiation with green light are genes involved in a common plant defense mechanism among a wide range of plant species. Accordingly, this effect observed in tomato is highly likely to have a similar effect in other plants.

### [Test 2]

An effect of light irradiation condition on the expression of a gene involved in disease resistance induction was investigated using a tomato seedling.

### [Materials and methods]

### (Materials)

As for a sample tomato variety, a *Momotaro* 8 variety (Takii Seed Co., Ltd.) was used. Seeds were sowed in a propagation medium (Zen-noh, Yosaku), and a true leaf of a two-week old seedling was used.

### (Test conditions)

A tomato seedling was transferred into a constant-temperature unit set to a room temperature of 25°C, and light irradiation was performed on the tomato seedling using LED light sources (blue, green, yellow, and red). The number of LED lamps was 360 for each of the light sources, and the whole plant body was evenly irradiated from 1 cm above the top of the plant body.

### (RNA extraction)

A tomato leaf was ground in liquid nitrogen using a pestle and a mortar immediately after the treatment. For RNA extraction from a ground tissue powder, an RNeasy Mini Kits (QIAGEN) was used.

### (Real-time PCR method)

An individual sample used for Real-time PCR was cDNA obtained by reverse transcription of 1 µg of total RNA extracted from the tomato leaf with the use of Quantitect Reverse Transcription kit (QIAGEN).

As for primers and probe, a TaqMan probe kit (156F/177Taq/220Rv; 5'-CCAAGCCTGGTGGAAGGA-3'/ 5'-CCGCGAAGAAGGACATGGCGA-3'/ 5'-GCCACCAAGGCTCATCTTTC-3') targeting LOX was used, and FAM was used as a reporter dye.

For a reaction, a PreMix (25 µl of Taq Man Universal PCR Master Mix, 0.5 µl of 50 µM Fw primer, 0.5 µl of 50 pM Rv primer, 0.5 µl of TaqMan probe, 21.5 µl of distilled water) was prepared, 2 µl of each sample cDNA was added thereto, and a reaction was carried out in a 50 µl reaction volume. ABI PRISM 7000 Sequence Detection System (Applied Biosystems) was used, and a reaction cycle was a cycle of 50°C for 2 minutes and 95°C for 10 minutes, and 40 cycles of 95°C for 15 seconds and 60°C for 1 minute.

For detection, a standard curve was created by calculating a logarithm of a Th line (Threshold line) on an amplification curve of individual samples, and the value of an expression level of chitinase was quantified as a relative value to an expression level of 25S rRNA gene.

### [Results and discussion]

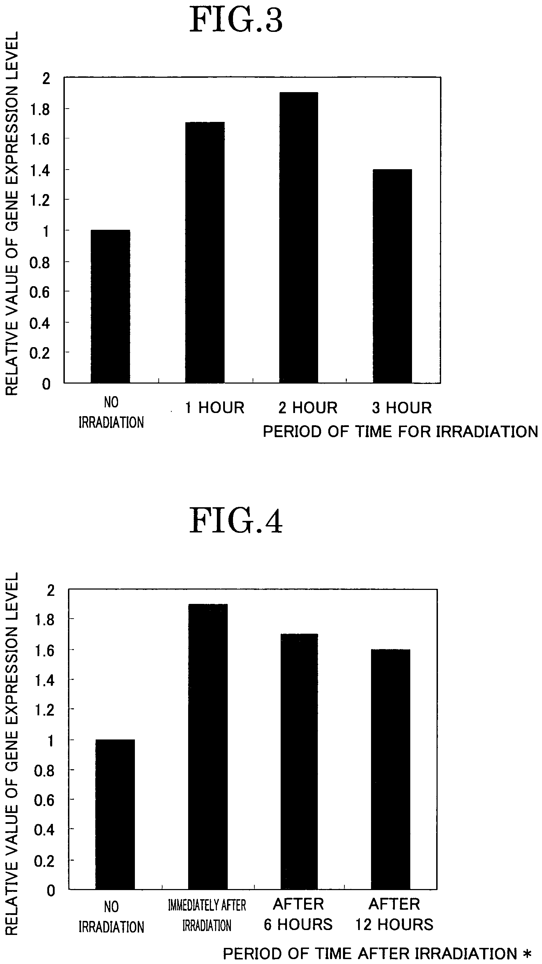

As a result of the investigation of a period of time for green light irradiation to induce a LOX gene, which is one of the resistance-related genes, it was revealed that the gene expression level was rapidly increased by irradiation for a few hours, approximately 1 to 3 hours. Moreover, as a result of the investigation of the duration of the gene expression, it was confirmed that the expression continued even 12 hours after the gene expression, although it was gradually decreasing (FIG. 3). Therefore, it was considered that disease resistance can be continuously induced by intermittently performing approximately 1 to 3 hours of irradiation with green light (FIG. 4).

Induction of LOX gene expression by irradiation with green light further supports the above-described effects of green light irradiation on disease resistance.

### [Test 3]

### [Materials and methods]

Using a disease causing system of cucumber and grey mold fungus (Botrytis cinerea), which is a typical pathogen in cucumber, an effect of green light irradiation on cucumber in a seedling stage during an infectious episode was investigated.

### (Seedling-raising method of an inoculated plant)

One cucumber seed (variety: creeping cucumber) was sowed in a black plastic pot having a diameter of 6 cm filled with vermiculite on December 1^{st}, Heisei 17, and sprouted and raised at a room temperature of 23°C under the lighting of a fluorescent lamp having an illumination intensity in a range 6,000 to 8,000 lux. For inoculation of a pathogen, a cucumber seedling having developed seed leaves and a true leaf was used.

### (Test conditions)

Setting of experimental sections was: a control section; a probenazole-applied section to which a commercially-available agent probenazole having an effect of improving disease resistance is applied; and a light-irradiation section. In the control section, pathogen inoculation was carried out on a seedling raised under the above-described seedling raising conditions. In the probenazole section, a 0.1% (w/v) aqueous solution of granulated Olizemate (manufactured by Meiji Seika Kaisha Ltd., active ingredient: 8% probenazole) was sprayed 2 hours before pathogen inoculation.

Thereafter, the section was placed back under the above-described seedling raising conditions, and pathogen inoculation was carried out after 2 hours. In the light-irradiation section, a seedling raised under the above-described seedling raising conditions was subjected to 2-hour light irradiation in which the whole plant was evenly irradiated from approximately 8 cm above the top of the plant body using a green LED light source before pathogen inoculation. After completion of the light irradiation treatment, a pathogen was immediately inoculated by an inoculation method described below. The number of cucumber plants used in each of the experimental sections was 6.

### (A method for preparing a pathogen suspension for inoculation and a method of pathogen inoculation)

Grey mold fungus (Botrytis cinerea NBRC9760 strain) was used for pathogen inoculation. The concentration of a spore suspension of the grey mold fungus was adjusted in a range from 10⁵ to 10⁶ spores/ ml to prepare a pathogen suspension. The suspension was filled into a spray container, and sprayed evenly onto the leaf surface of a cucumber seedling for inoculation. Inoculation was carried out on December 12, Heisei 17.

### (A cultivation method after inoculation)

After the inoculation of the pathogen suspension, the cucumber seedling was covered by a plastic bag, and cured for 2 days in a plant raising constant-temperature chamber at a room temperature of 20°C and humidity of 90% with a day length of 12 hours. After the curing, the plastic bag was removed, and the seedling was cultured for 2 weeks in a plant raising constant-temperature chamber at a room temperature of 30°C and humidity of 85% with a day length of 12 hours.

### (Determination of disease damage)

After carrying out the culture for approximately 2 weeks after the inoculation, incidence of disease damage was investigated. To be more specific, determination was carried out by identifying a cucumber seedling showing development of lesion on the underside of a seed leaf as a diseased plant and a seedling not showing such lesion as a healthy plant. Determination of disease damage was carried out December 26, Heisei 17.

### [Results and discussion]

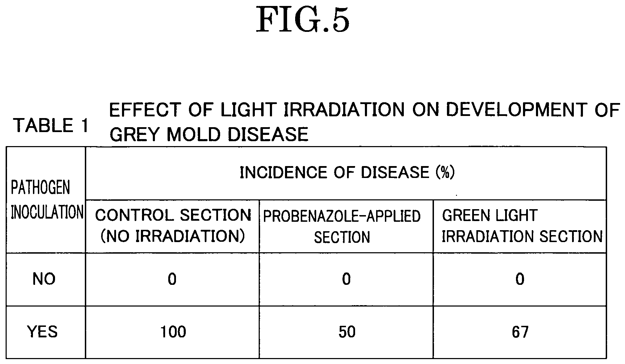

As a result of the determination of disease damage development approximately 2 weeks after inoculation of the grey mold fungus, formation of lesion in a seed leaf in all the plants in the control section was observed, and an incidence of 100% was shown. On the other hand, the incidence was 50% in the probenazole-applied section and 67% in the light-irradiating section (refer to Table 1 in FIG. 5).

Furthermore, it was also observed that the degree of disease development in the diseased plants both in the probenazole-applied section and the light-irradiation section was made lighter than those in the control section. Therefore, it was revealed that disease resistance can be improved by green light irradiation and infection of a pathogen can be prevented. In addition, such an effect was proved to be equivalent to that of probenazole.

These phenomena are considered to be induction of systemic acquired resistance, and the possibility that disease resistance by local irradiation can reach the whole body was also suggested. The present control method is not a method for sterilizing a pathogen itself, but a method for decreasing an infection with a disease by improving disease resistance in a plant body so as to prevent infection and invasion of a pathogen into the plant body.

In other words, it is assumed that a condition in which disease resistance is enhanced in a plant body by periodically receiving light irradiation can be continuously maintained, and infection with a pathogen can be prevented. Hence, a prospect has been obtained for a pioneering optical control technique which can replace conventional control using a pesticide agent.

### [Test 4]

An effect of light intensity on the expression of a disease-resistant gene was investigated using a cucumber seedling.

### [Materials and methods]

### (Materials)

A cucumber seed ('Alpha *Fushinari* Kurume Vegetable Breeding Co., Ltd.) was sowed in a nursery soil, and a seedling obtained one week after the sowing was used.

### (Test conditions)

In a chamber set to 25°C, a cucumber seedling was irradiated for 2 hours using a green LED as a light source at a light intensity of 30 µmol/m²/s, 60 µmol/m²/s, or 120 µmol/m²/s. Immediately after the irradiation, RNA was extracted from a seed leaf and a true leaf of the individual cucumber seedling.

### (RNA extraction)

A cucumber leaf was ground in liquid nitrogen using a pestle and a mortar immediately after the treatment. For RNA extraction from a ground tissue powder, an RNeasy Mini Kits (QIAGEN) was used.

### (Real-time PCR method)

An individual sample used for Real-time PCR was cDNA obtained by reverse transcription of 2 µg of total RNA extracted from the cucumber leaf with the use of High Capacity cDNA Reverse Transcription Kit (Applied Biosystems).

As for primers and probes, a TaqMan probe (16F/128Taq/279Rv; 5'-acaggttagttttaccctactgatgaca-3'/ 5'-cgcgaagctaccgtgtgctggattat-3'/ 5'-ccgtcgcggcgactta-3') targeting 25S rRNA and a TaqMan probe (Cucu-Fw550F/ CucuTaq571/ CucuRv616; 5'-gccgcagtgtccaatacca-3'/ 5'-cgctcacctagacgccgcgatc-3'/ 5'-aacggaatcgaacagtccagtt-3') targeting chitinase were used, and FAM was used as a reporter dye.

For a reaction, a PreMix (25 µl of Taq Man Universal PCR Master Mix, 0.5 µl of 50 pM Fw primer, 0.5 µl of 50 µM Rv primer, 0.5 µl of TaqMan probe, 21.5 µl of purified water) was prepared, 1 µl of each sample cDNA was added thereto, and a reaction was carried out in a 50 µl reaction volume. For detection, ABI PRISM 7000 Sequence Detection System (Applied Biosystems) was used, and a reaction cycle was a cycle of 50°C for 2 minutes and 95°C for 10 minutes, and 40 cycles of 95°C for 15 seconds and 60°C for 1 minute.

For detection, a standard curve was created by calculating a logarithm of a Th line on an amplification curve of individual samples, and the value of an expression level of chitinase was quantified as a relative value to an expression level of 25S rRNA gene.

### (Results)

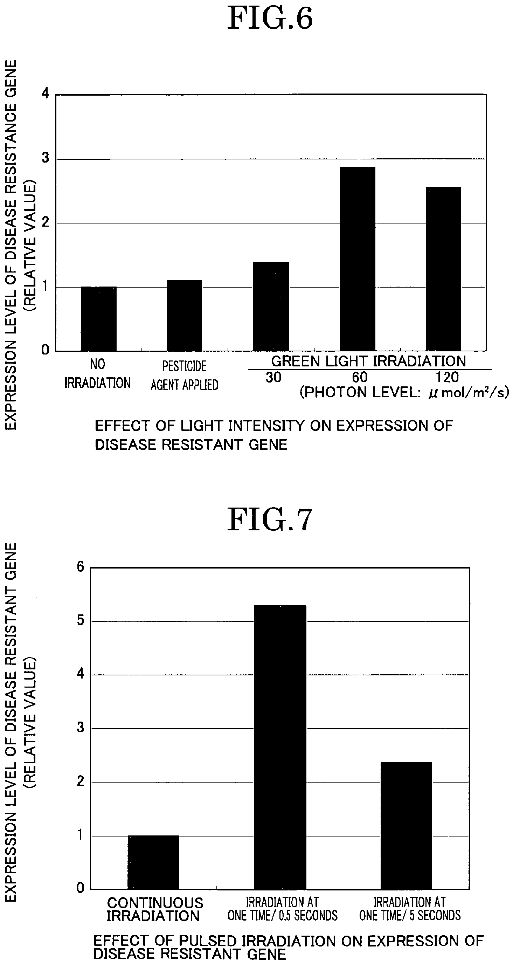

As a result of the gene analysis of the effect of light intensity on the expression of the disease resistance gene, it was observed that the expression level of the resistant gene was highest at 60 µmol/m²/s in the case of immediately after 2-hour irradiation of green light (FIG. 6). On the other hand, in a control effect confirmation test using a disease system, which will be described later, the control effect was high at approximately 80 µmol/m²/s for strawberry and approximately 120 µmol/m²/s for cucumber.

According to these results, it was supported by the gene analysis that the light intensity which showed the effect in the control test using a disease system was also an appropriate light intensity in expression of disease resistance.

The fact that the gene of chitinase, which is one of typical PR proteins, was induced by green light further strongly supports the above-described disease resistance inductive effect of green light irradiation.

### [Test 5]

An effect of pulsed irradiation on the expression of a disease-resistant gene was investigated using a cucumber seedling.

### [Materials and methods]

### (Materials)

A cucumber seed ('Alpha *Fushinarl* Kurume Vegetable Breeding Co., Ltd.) was sowed in a nursery soil, and a seedling obtained one week after the sowing was used.

### (Test conditions)

In a chamber set to 25°C, a cucumber seedling was irradiated for 2 hours using a green LED as a light source at an irradiation interval of 1 time/ 0.5 seconds or 1 time/ 5 seconds or continuously. One day after the irradiation, RNA was extracted from a seed leaf and a true leaf of the individual cucumber seedling.

### (RNA extraction)

A cucumber leaf was ground in liquid nitrogen using a pestle and a mortar immediately after the treatment. For RNA extraction from a ground tissue powder, an RNeasy Mini Kits (QIAGEN) was used.

### (Real-time PCR method)

An individual sample used for Real-time PCR was cDNA obtained by reverse transcription of 2 µg of total RNA extracted from the cucumber leaf with the use of High Capacity cDNA Reverse Transcription Kit (Applied Biosystems).

As for primers and probes, a TaqMan probe (16F/128Taq/279Rv; 5'-acaggttagttttaccctactgatgaca-3'/ 5'-cgcgaagctaccgtgtgctggattat-3'/ 5'-ccgtcgcggcgactta-3') targeting 25S rRNA and a TaqMan probe (Cucu-Fw550F/ CucuTaq571/ CucuRv616; 5'-gccgcagtgtccaatacca-3'/ 5'-cgctcacctagacgccgcgatc-3'/ 5'-aacggaatcgaacagtccagtt-3') targeting chitinase were used, and FAM was used as a reporter dye.

For a reaction, a PreMix (25 µl of Taq Man Universal PCR Master Mix, 0.5 µl of 50 µM Fw primer, 0.5 µl of 50 µM Rv primer, 0.5 µl of TaqMan probe, 21.5 µl of purified water) was prepared, 1 µl of each sample cDNA was added thereto, and a reaction was carried out in a 50 µl reaction volume. For detection, ABI PRISM 7000 Sequence Detection System (Applied Biosystems) was used, and a reaction cycle was a cycle of 50°C for 2 minutes and 95°C for 10 minutes, and 40 cycles of 95°C for 15 seconds and 60°C for 1 minute.

For detection, a standard curve was created by calculating a logarithm of a Th line on an amplification curve of individual samples, and the value of an expression level of chitinase was quantified as a relative value to an expression level of 25S rRNAgene.

### [Results and discussion]

### (Results)

As a result of the gene analysis of the effect of irradiation interval on the expression of the disease resistance gene, it was observed that the expression level of the disease resistance gene tended to be higher when pulsed irradiation is carried out than when continuous irradiation is carried out (FIG. 7). On the other hand, in a control effect confirmation test using a disease system, which will be described later, the control effect was high with pulsed irradiation of 1 time every 5 seconds. According to these results, it was supported by the gene analysis that the pulsed irradiation which showed the effect in the control test using a disease system was also an effective irradiation method in expression of disease resistance.

### [Test 6]

### (Inhibitory effect on strawberry anthracnose by green light irradiation)

### [Materials and methods]

Using a disease causing system of strawberry and grey mold fungus (Glomerella cingulata), which is a typical pathogen in strawberry, an effect of green light irradiation on strawberry in a seedling stage during an infectious episode was investigated.

### (Seedling-raising method of an inoculated plant)

A runner of strawberry (variety: *Sachinoka*) was collected into a black plastic pot having a diameter of 8 cm filled with a soil for strawberry seedling raising (*Sukusuku* system *Senyou Baido,* Marusan Industry Co., Ltd.), and raised for approximately 1 month. For pathogen inoculation, a strawberry seedling having 3 true leaves was used.

### (Test conditions)

Setting of experimental sections was: a non-treatment section; a pesticide agent-applied section to which a commercially-available agent having an effect of improving disease resistance is applied; and a green light irradiation section.

In the non-treatment section, pathogen inoculation was carried out on a seedling raised under the above-described seedling raising conditions. In the pesticide agent-applied section, a 0.1% (w/v) aqueous solution of granulated Olizemate (manufactured by Meiji Seika Kaisha Ltd., active ingredient: 8.0% probenazole) was sprayed 2 hours before pathogen inoculation. The seedlings were left at rest at a room temperature of 23°C under a fluorescent lamp having an illumination intensity in a range 6,000 to 8,000 lux for 2 hours, and then subjected to pathogen inoculation.

In the green light irradiation section, in a chamber set to 25°C, a strawberry seedling was irradiated for 2 hours using a green light LED as a light source at a light intensity of 15 µmol/m²/s, 30 µmol/m²/s, or 80 µmol/m²/s before pathogen inoculation. After the completion of the light-irradiation treatment, the pathogen was immediately inoculated by an inoculation method which will be described below. The number of strawberry plants used in each of the experimental sections was 7.

### (A method for preparing a pathogen suspension for inoculation and a method of pathogen inoculation)

Anthracnose fungus (Glomerella cingulata NBRC6425 strain) was used for pathogen inoculation. The concentration of a spore suspension of the anthracnose fungus was adjusted in a range from 10⁵ to 10⁶ spores/ ml to prepare a pathogen suspension. The suspension was filled into a spray container, and sprayed evenly onto the leaf surface of a strawberry seedling for inoculation.

### (A cultivation method after inoculation)

After the inoculation of the pathogen suspension, the seedling was covered with a plastic bag, and cured for two days in a plant raising constant-temperature chamber at a room temperature of 20°C and humidity of 90% with a day length of 12 hours. After the curing, the plastic bag was removed, and the seedling was cultured for 2 weeks in a plant raising constant-temperature chamber at a room temperature of 30°C and humidity of 85% with a day length of 12 hours.

After carrying out the culture for approximately 2 weeks after the inoculation, incidence of disease damage was investigated. To be more specific, determination was carried out by identifying a strawberry seedling showing development of lesion on the leaf surface as a diseased plant and a seedling not showing such lesion as a healthy plant. The degree of lesion in a diseased plant was classified into 3 stages, and the degree of disease development was observed.

### [Results and discussion]

As a result of the determination of disease damage development approximately 2 weeks after the inoculation of the strawberry anthracnose fungus to a strawberry seedling, it was observed that the degree of disease development was made lighter in the green light-irradiation section than in the control section. Therefore, it was revealed that disease resistance can be improved by green light irradiation and infection with strawberry anthracnose fungus can be prevented.

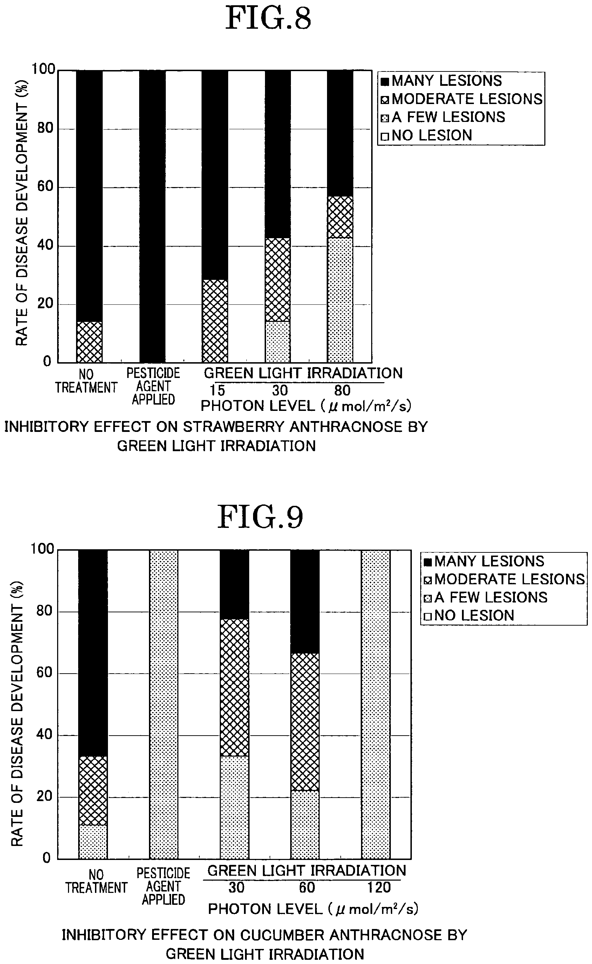

Furthermore, it was revealed that the effective light intensity in the case of 2-hour irradiation was approximately 80 µmol/m²/s for strawberry (FIG. 8).

### [Test 7]

### (Inhibitory effect on cucumber anthracnose by green light irradiation)

### [Materials and methods]

Using a disease causing system of cucumber and anthracnose fungus (Colletotrichum orbiculare), which is a typical pathogen in cucumber, an effect of green light irradiation on cucumber in a seedling stage during an infectious episode was investigated.

### (Seedling-raising method of an inoculated plant)

One cucumber seed (variety: Alpha *Fushinari*) was sowed in a black plastic pot having a diameter of 6 cm filled with vermiculite, and sprouted and raised at a room temperature of 23°C under the lighting of a fluorescent lamp having an illumination intensity in a range 6,000 to 8,000 lux. For inoculation of a pathogen, a cucumber seedling having developed seed leaves and a true leaf was used.

### (Test conditions)

Setting of experimental sections was: a non-treatment section; a pesticide agent-applied section to which a commercially-available agent having an effect of improving disease resistance is applied; and a green light irradiation section.

In the non-treatment section, pathogen inoculation was carried out on a seedling raised under the above-described seedling raising conditions. In the pesticide agent-applied section, a 0.1% (w/v) aqueous solution of granulated Olizemate (manufactured by Meiji Seika Kaisha Ltd., active ingredient: 8.0% probenazole) was sprayed 2 hours before pathogen inoculation.

The seedlings were left at rest at a room temperature of 23°C under a fluorescent lamp having an illumination intensity in a range 6,000 to 8,000 lux for 2 hours, and then subjected to pathogen inoculation. In the green light-irradiation section, in a chamber set to 25°C, a cucumber seedling was irradiated for 2 hours before pathogen inoculation using a green light LED as a light source at a light intensity of 30 µmol/m²/s, 60 µmol/m²/s, or 120 µmol/m²/s. After the completion of the light-irradiation treatment, the pathogen was immediately inoculated by an inoculation method described below. The number of cucumber plants used in each of the experimental sections was 9.

### (A method for preparing a pathogen suspension for inoculation and a method of pathogen inoculation)

Anthracnose fungus (Colletotrichum orbiculare NBRC33130 strain) was used for pathogen inoculation. The concentration of a spore suspension of the anthracnose fungus was adjusted in a range from 10⁵ to 10⁶ spores/ ml to prepare a pathogen suspension. The suspension was filled into a spray container, and sprayed evenly onto the leaf surface of a cucumber seedling for inoculation.

### (A cultivation method after inoculation)

After the inoculation of the pathogen suspension, the cucumber seedling was covered by a plastic bag, and cured for two days in a plant raising constant-temperature chamber at a room temperature of 20°C and humidity of 90% with a day length of 12 hours. After the curing, the plastic bag was removed, and the seedling was cultured for 2 weeks in a plant raising constant-temperature chamber at a room temperature of 30°C and humidity of 85% with a day length of 12 hours.

### [Results and discussion]

As a result of the determination of disease damage development approximately 2 weeks after the inoculation of the cucumber anthracnose fungus to a cucumber seedling, it was observed that the degree of disease development was made lighter in the green light-irradiation section than in the control section. Therefore, it was revealed that disease resistance can be improved by green light irradiation and infection with cucumber anthracnose fungus can be prevented.

Furthermore, it was revealed that the effective light intensity in the case of 2-hour irradiation was approximately 120 µmol/m²/s for cucumber (FIG. 9).

### [Test 8]

### (Effect of a period of time for irradiation on control effect)

### [Materials and methods]

Using a disease causing system of cucumber and anthracnose fungus (Colletotrichum orbiculare), which is a typical pathogen in cucumber, an effect of green light irradiation on cucumber in a seedling stage during an infectious episode was investigated.

### (Seedling-raising method of an inoculated plant)

One cucumber seed (variety: Alpha *Fushinari*) was sowed in a black plastic pot having a diameter of 6 cm filled with vermiculite, and sprouted and raised at a room temperature of 23°C under the lighting of a fluorescent lamp having an illumination intensity in a range 6,000 to 8,000 lux. For inoculation of a pathogen, a cucumber seedling having developed seed leaves and a true leaf was used.

### (Test conditions)

Setting of experimental sections was: a control section; a probenazole-applied section to which a commercially-available agent probenazole having an effect of improving disease resistance is applied; and a light irradiation section. In the control section, pathogen inoculation was carried out on a seedling raised under the above-described seedling raising conditions. In the probenazole section, a 0.1% (w/v) aqueous solution of granulated Olizemate (manufactured by Meiji Seika Kaisha Ltd., active ingredient: 8.0% probenazole) was sprayed 2 hours before pathogen inoculation.

The seedlings were left at rest at a room temperature of 23°C under a fluorescent lamp having an illumination intensity in a range 6,000 to 8,000 lux for 2 hours, and then subjected to pathogen inoculation. In the green light-irradiation section, in a chamber set to 25°C, a cucumber seedling was irradiated for 1 hour, 2 hours, or 6 hours using a green light LED as a light source at a light intensity of 120 µmol/m²/s before pathogen inoculation. After the completion of the light-irradiation treatment, the pathogen was immediately inoculated by an inoculation method described below. The number of cucumber plants used in each of the experimental sections was 9.

### (A method for preparing a pathogen suspension for inoculation and a method of pathogen inoculation)

Anthracnose fungus (Colletotrichum orbiculare NBRC33130 strain) was used for pathogen inoculation. The concentration of a spore suspension of the anthracnose fungus was adjusted in a range from 10⁵ to 10⁶ spores/ ml to prepare a pathogen suspension. The suspension was filled into a spray container, and sprayed evenly onto the leaf surface of a cucumber seedling for inoculation.

### (A cultivation method after inoculation)

After the inoculation of the pathogen suspension, the cucumber seedling was covered by a plastic bag, and cured for two days in a plant raising constant-temperature chamber at a room temperature of 20°C and humidity of 90% with a day length of 12 hours. After the curing, the plastic bag was removed, and the seedling was cultured for 2 weeks in a plant raising constant-temperature chamber at a room temperature of 30°C and humidity of 85% with a day length of 12 hours.

### (Determination of disease damage)

After carrying out the culture for approximately 2 weeks after the inoculation, incidence of disease damage was investigated. To be more specific, determination was carried out by identifying a cucumber seedling showing development of lesion on the underside of a seed leaf as a diseased plant and a seedling not showing such lesion as a healthy plant.

### [Results and discussion]

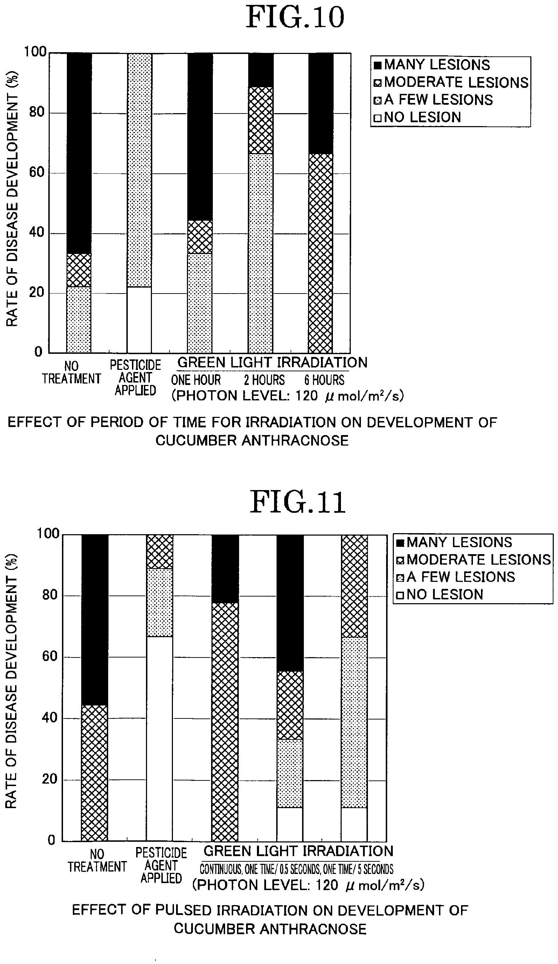

As a result of the determination of disease damage development approximately 2 weeks after inoculation of the cucumber anthracnose fungus to a cucumber seedling, it was observed that the disease development was made lightest by 2-hour irradiation. Therefore, as for the time of green light irradiation, it was revealed that 2-hour irradiation has the highest inhibitory effect (FIG. 10).

### (Effect of pulsed irradiation on control effect)

### [Materials and methods]

Using a disease causing system of cucumber and anthracnose fungus (Colletotrichum orbiculare), which is a typical pathogen in cucumber, an effect of green light irradiation on cucumber in a seedling stage during an infectious episode was investigated.

### (Seedling-raising method of an inoculated plant)

One cucumber seed (variety: Alpha *Fushinari*) was sowed in a black plastic pot having a diameter of 6 cm filled with vermiculite, and sprouted and raised at a room temperature of 23°C under the lighting of a fluorescent lamp having an illumination intensity in a range 6,000 to 8,000 lux. For inoculation of a pathogen, a cucumber seedling having developed seed leaves and a true leaf was used.

### (Test conditions)

Setting of experimental sections was: a control section; a probenazole-applied section to which a commercially-available agent probenazole having an effect of improving disease resistance is applied; and a light irradiation section. In the control section, pathogen inoculation was carried out on a seedling raised under the above-described seedling raising conditions. In the probenazole section, a 0.1% (w/v) aqueous solution of granulated Olizemate (manufactured by Meiji Seika Kaisha Ltd., active ingredient: 8.0% probenazole) was sprayed 2 hours before pathogen inoculation.

The seedlings were left at rest at a room temperature of 23°C under a fluorescent lamp having an illumination intensity in a range 6,000 to 8,000 lux for 2 hours, and then subjected to pathogen inoculation. In the green light-irradiation section, in a chamber set to 25°C, a cucumber seedling was irradiated continuously, at intervals of 1 time/ 0.5 seconds, or at intervals of 1 time/ 5 seconds using a green light LED as a light source at a light intensity of 120 µmol/m²/s before pathogen inoculation. After the completion of the light-irradiation treatment, the pathogen was immediately inoculated by an inoculation method described below. The number of cucumber plants used in each of the experimental sections was 9.

### (A method for preparing a pathogen suspension for inoculation and a method of pathogen inoculation)

Anthracnose fungus (Colletotrichum orbiculare NBRC33130 strain) was used for pathogen inoculation. The concentration of a spore suspension of the anthracnose fungus was adjusted in a range from 10⁵ to 10⁶ spores/ ml to prepare a pathogen suspension. The suspension was filled into a spray container, and sprayed evenly onto the leaf surface of a cucumber seedling for inoculation.

### (A cultivation method after inoculation)

After the inoculation of the pathogen suspension, the cucumber seedling was covered by a plastic bag, and cured for two days in a plant raising constant-temperature chamber at a room temperature of 20°C and humidity of 90% with a day length of 12 hours. After the curing, the plastic bag was removed, and the seedling was cultured for 2 weeks in a plant raising constant-temperature chamber at a room temperature of 30°C and humidity of 85% with a day length of 12 hours.

### (Determination of disease damage)

After carrying out the culture for approximately 2 weeks after the inoculation, incidence of disease damage was investigated. To be more specific, determination was carried out by identifying a cucumber seedling showing development of lesion on the underside of a seed leaf as a diseased plant and a seedling not showing such lesion as a healthy plant.

### [Results and discussion]

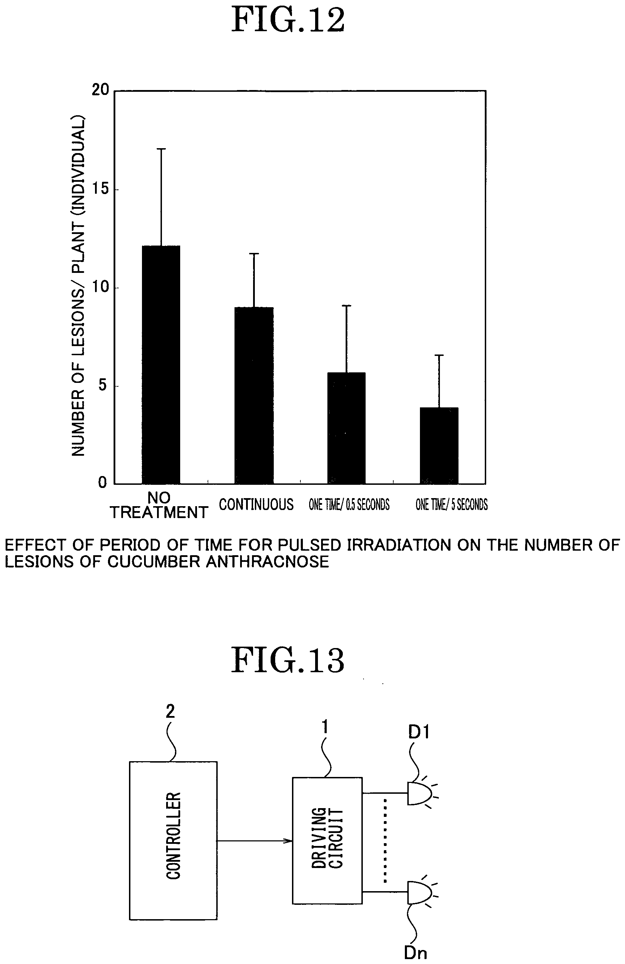

As a result of the determination of disease damage development approximately 2 weeks after inoculation of the cucumber anthracnose fungus to a cucumber seedling, it was found that the disease damage inhibitory effect was further enhanced by pulsed irradiation (FIG. 11). The number of lesions per one plant was measured, and it was observed that the disease development was made lightest by green light irradiation at intervals of 1 time/ 5 seconds (FIG. 12). Therefore, it was clarified that the control effect can be improved by pulsed irradiation of green light.

### Examples

### (Example 1)

FIG. 13 is a block view of a configuration of an example of a control device which carries out a control method of the present invention. In FIG. 13, D1 to Dn are light emitting diodes (light emitting means) which irradiate a plant by emitting green light, 1 is a driving circuit which causes the light emitting diodes D1 to Dn to light up, and 2 is a controller (control means) which controls the driving circuit 1.

The controller 2 which is composed of, for example, CPU and the like irradiates a plant intermittently with green light emitted from the light emitting diodes D1 to Dn by repeatedly causing the light emitting diodes D1 to Dn to light up for 3 hours, for example, and then go off for 12 hours, for example, by controlling the driving circuit. This irradiation may be on the whole plant body or on a part of a plant. For example, a leaf may be irradiated or a part of a stem may be irradiated.

In the above-described example, the light emitting diodes D1 to Dn are caused to emit light intermittently; however, it is not necessarily required to cause them to intermittently emit light. Furthermore, the light emitting diodes D1 to Dn are caused to emit green light; however, it is not limited to this, and a lamp, for example, may also be applicable.

In addition, it may be configured that only green light is irradiated by using a colored film or the like with solar light, or that another color light having a wavelength region of a color other than green may be included. In such a case, it is only required that green light is stronger than another color light.

### (Example 2)

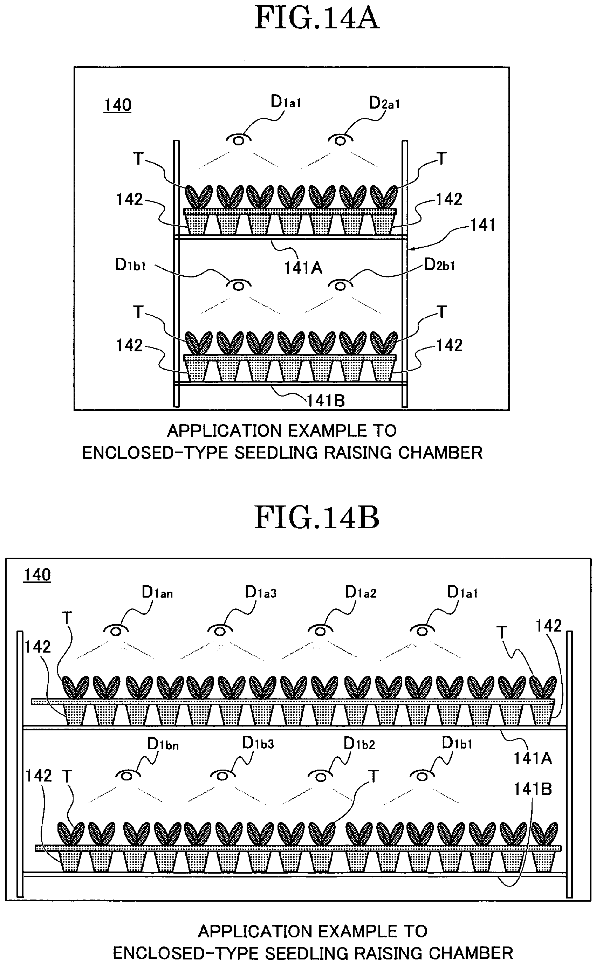

FIG. 14 to FIG. 17 illustrate a control device which is capable of irradiating the whole culture surface at once according to the scale and specifications of a seedling-raising or culture facility. This control device is composed of a green light source and a controller, which is not shown in the drawings. This controller is composed of a CPU, a memory and the like, which are not shown in the drawings. In the memory, a control program is recorded. This controller is configured to perform, based on the control program, automatic control regarding irradiation under, for example, the following conditions: (1) at set irradiation intervals (1 time/ L days) (L is a desired integer number); (2) in a time zone for irradiation set to, for example, midnight, after sunset, or before sunrise; (3) for a period of time set for 1 session of irradiation set (M minutes/ time) (M is a desired integer number); (4) for irradiation by an irradiation method set to, for example, continuous irradiation or pulsed irradiation; and (5) at a set light intensity (µmol/m²/s). In addition, in order to reduce cost for automatic control, it is possible to simplify the automatic control by configuring that only (2) and (3) are automatically controlled by use of a simple timer, and (1), (5), and the like are manually adjusted and driven by a user, for example.

FIG. 14A and FIG. 14B illustrate an application example to an enclosed-type seedling raising chamber 140. FIG. 14A is a front view schematically showing the inside of the enclosed-type seedling raising chamber 140, and FIG. 14B is the lateral view thereof. In the enclosed-type seedling raising chamber 140, double-deck seedling-raising shelves 141 are provided. On the shelves 141A and 141B of the seedling-raising shelves 141, multiple pots 142 each having plant T planted therein are placed. According to this application example, green light irradiation to the plant T placed on the seedling-raising shelves 141 prevents disease damage on the seedlings and achieves high-quality seedling production and seedling storage. Here, the enclosed-type seedling raising chamber refers to a seedling raising chamber which can be controlled to provide an optimal environment (temperature, humidity, illumination, and the like) for seedling production and seedling storage.

Above plants T on the selves 141Aand 141B, light emitting diodes D1a1 to D1an, D2a1 to D2an, Dab1 to D1bn, and D2b1 to D2bn which emit monochromatic green light are arranged. These light emitting diodes are attached to, for example, a holding part, which is not shown in the drawings, provided on the seedling-raising shelves 141. The light emitting diodes D1a1 to D1an, D2a1 to D2an, Dab1 to D1bn, and D2b1 to D2bn are controlled in terms of lighting time, pulse cycle, light emitting intensity, and the like by a controller which is not shown in the drawings. When these controls are carried out according to the type of the plant T, it is possible to effectively obtain a control effect.

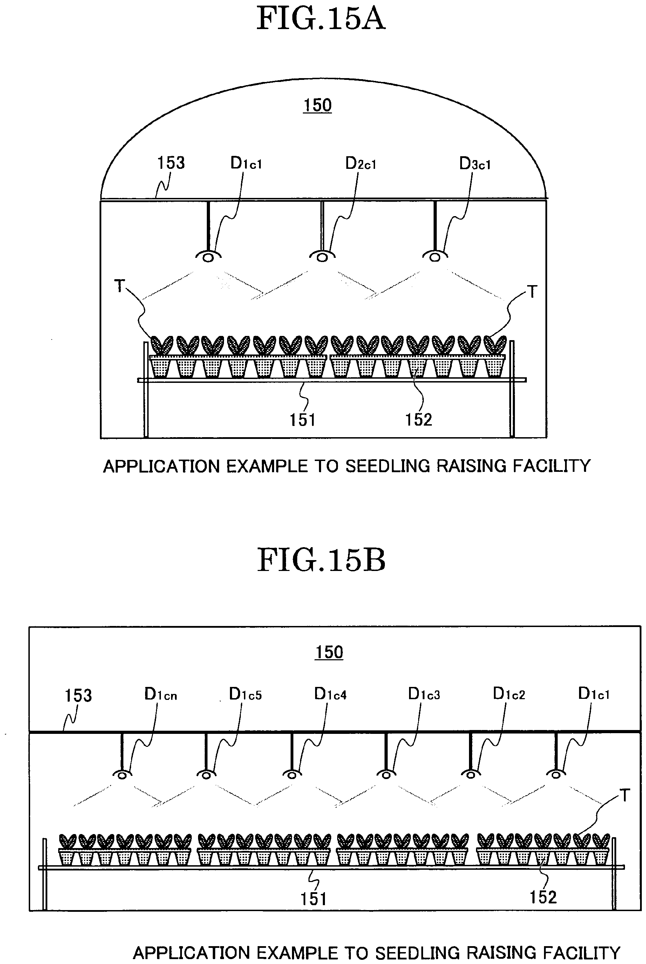

FIG. 15A and FIG. 15B illustrate an application example to a seedling-raising facility 150 in a plastic greenhouse or in a building. FIG. 15A is a front view schematically showing the inside of the seedling-raising facility 150, and FIG. 15B is the lateral view thereof. Irradiation of green light to plant T (seedling) prevents disease damage on the seedling and achieves high-quality seedling production. In this seedling-raising facility 150, a seedling-raising shelf 151 is provided. On this seedling-raising shelf 151, multiple pots 152 each having plant T planted therein are placed.

Above the plant T, multiple light emitting diodes D1c1 to D1cn, D2c1 to D2cn, and D3c1 to D3cn which emit monochromatic green light are arranged, and these light emitting diodes D1c to D3c are attached to a holding member 153 (for example, a building aggregate or the like) provided in the seedling-raising facility 150. The light emitting diodes D1c to D3c are controlled in terms of lighting time, pulse cycle, light emitting intensity, and the like by a controller which is not shown in the drawings. When these controls are carried out according to the type of the plant T, it is possible to effectively obtain a control effect.

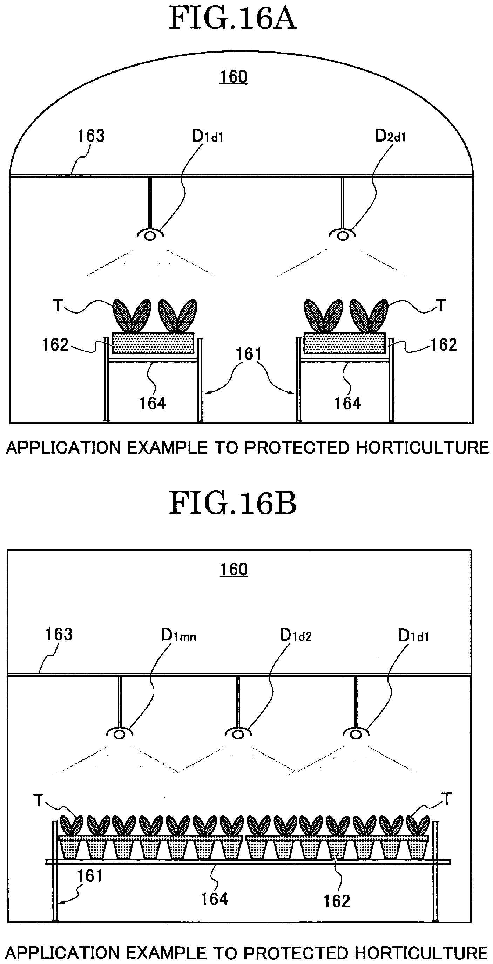

FIG. 16A and FIG. 16B illustrate an application example to a protected horticulture. FIG. 16A is a front view schematically showing the inside of a facility 160, and FIG. 16B is the lateral view thereof. Irradiation of green light on a culture surface prevents disease damage during a culture period and achieves high quality and an increased yield of plant T. In this facility 160, seedling-raising shelves 161 and 161 are provided in two rows. On each of shelves 164 of the respective seedling-raising shelves 161 arranged in two rows, a pot 162 having plant T planted therein is placed.

Above the seedling-raising shelves 161 and 161, multiple light emitting diodes D1d1 to D1dn and D2d1 to D2dn which emit monochromatic green light along a longitudinal direction are arranged. These light emitting diodes D1d1 to D1dn and D2d1 to D2dn are attached to, for example, a holding member 163 provided in the facility 160. The light emitting diodes D1d1 to D1dn and D2d1 to D2dn are controlled in terms of lighting time, pulse cycle, light emitting intensity, and the like by a controller which is not shown in the drawings. When these controls are carried out according to the type of the plant T, it is possible to effectively obtain a control effect.

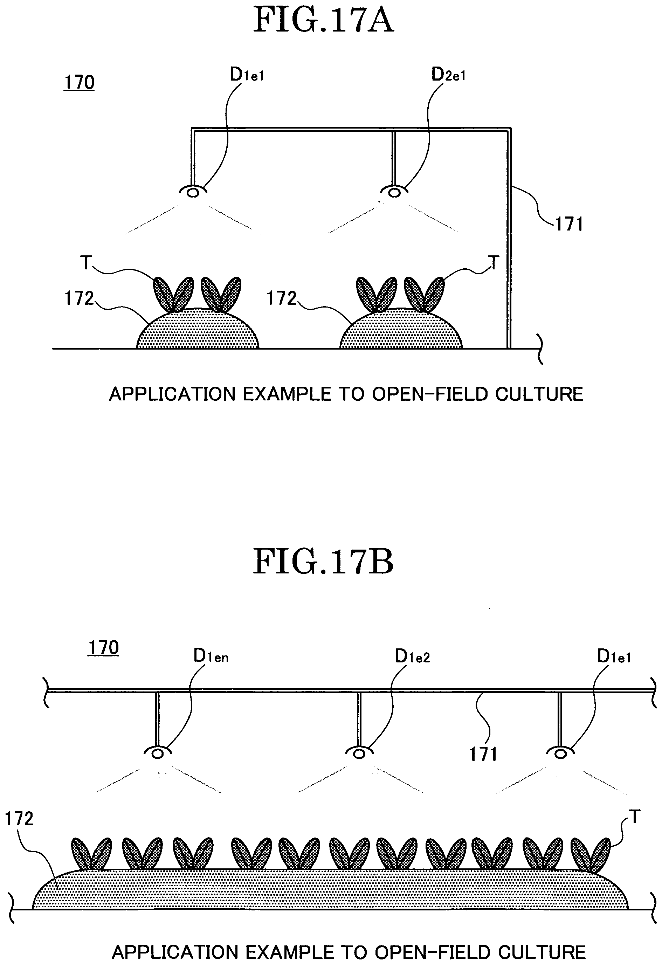

FIGs. 17 illustrate an application example to open-field culture. FIG. 17A is a front view schematically illustrating an open field 170, FIG. 17B is the lateral view thereof. Irradiation of green light to the culture surface of the open-field culture, in which disease damage is apt to occur since plants are exposed to rain with no cover, prevents disease damage during the culturing period and achieves high quality and an increased yield. In this open-field culture, ridges 172 and 172 each having plant T planted therein are arranged in two rows in the open field 170.

Above these ridges 172 and 172 arranged in two rows, multiple light emitting diodes D1e1 to D1en and D2e1 to D2en which emit monochromatic green light along each of the ridges 172 and 172. These light emitting diodes D1e1 to D1en and D2e1 to D2en are attached to, for example, a holding member 171 provided in the open field. The light emitting diodes D1e1 to D1en and D2e1 to D2en are controlled in terms of lighting time, pulse cycle, light emitting intensity, and the like by a controller which is not shown in the drawings. When these controls are carried out according to the type of the plant T, it is possible to effectively obtain a control effect.

Although LED is used as the green light sources Da to De in FIG. 14 to FIG. 17, a green fluorescent lamp, HID (high-intensity discharge lamp), or the like may also be used.

### (Example 3)

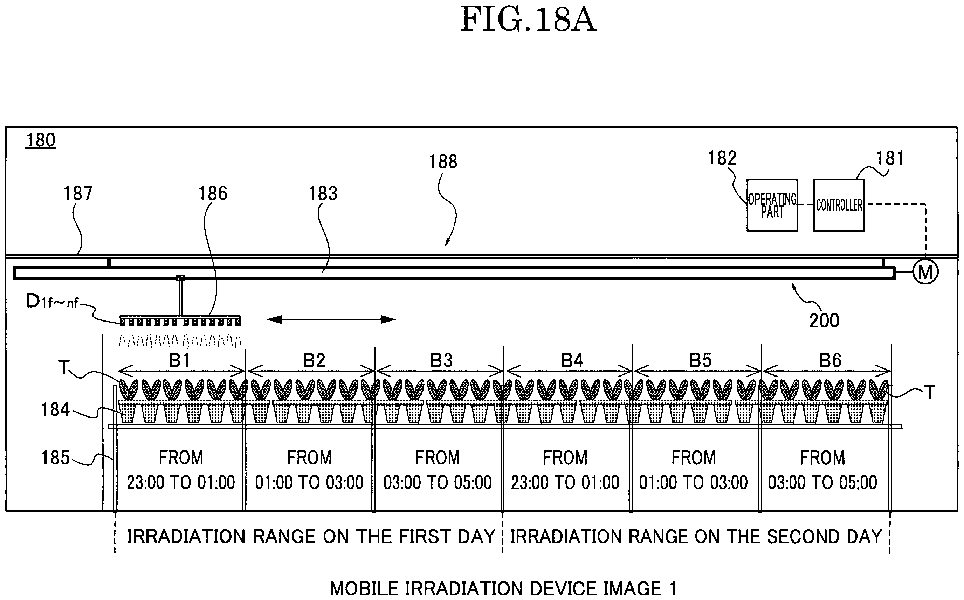

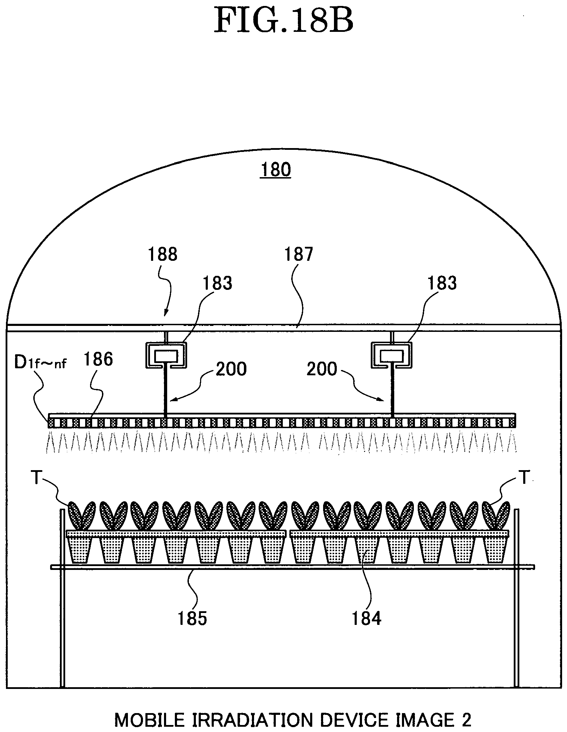

FIG. 18A and FIG. 18B illustrate a large-scale seedling-raising facility 180 in which a mobile controlled device 188 capable of irradiating the entire culture surface while moving on the culture surface according to the scale and specifications of a seedling-raising or culture facility. FIG. 18A is a lateral view schematically illustrating the seedling-raising facility 180, and FIG. 18B is the front view thereof. In the seedling-raising facility 180, a seedling-raising shelf 185 is provided. On the seedling-raising shelf 185, multiple pots 184 having plant T planted therein are placed.

Above the plant T, multiple light emitting diodes D1f to Dnf which emit monochromatic green light are arranged in a matrix form on a holding board 186. The holding board 186 is movably and detachably attached to a rail 183.

A control device 188 includes the light emitting diodes D1f to Dnf provide on the holding board 186, a moving unit (moving means) 200 which moves the holding board 186 along the rail 183, and a controller 181 which carries out control of the moving unit 200 and light emission control of the light emitting diodes D1f to Dnf.

The moving unit 200 is composed of a driving pulley, which is not shown in the drawings, provided on, for example, one end side of the rail 183; a driven pulley, which is not shown in the drawings, provided on the other end side of the rail 183; a belt, which is not shown in the drawings, wound around the driving pulley and the driven pulley; a motor M for rotating the driving pulley; and the like. The holding board 186 is connected to the belt, and it is configured that the holding board 186 moves along the rail 183 according to movement of the belt.

The controller 181 is composed of a CPU, a memory, and the like which are not shown in the drawings. A predetermined program for controlling the motor M, the light emitting diodes D1f to Dnf, and the like is stored in this memory. The motor M is driven according to the control program, and the holding board 186 is moved to a predetermined block position of B1 to B6, which will be described later, within the facility 180 by the motor M being driven. The light emitting diodes D1f to Dnf on the holding board 186 irradiate plant T by emitting light according to the control program.

A seedling-raising shelf 185 is divided along its longitudinal direction into 6 blocks B1 to B6 having the same size.

The holding board 186 is set to have approximately same transverse and longitudinal dimensions as those of the individual blocks B1 to B6. Accordingly, it is configured that the entire block of the individual blocks B1 to B6 can be irradiated by the light emitting diodes D1f to Dnf.

Next, an example of an irradiation method of the individual blocks B1 to B6 will be described.

In the case where the individual blocks B1 to B6 are irradiated, for example, 1 time/ 2 days, and irradiated for 2 hours at night, (1) the block B1 is irradiated during a period from 23:00 to 01:00 on the first day, and (2) the block B2 is irradiated during a period from 01:00 to 03:00 on the first day. Then, (3) the block B3 is irradiated during the period from 03:00 to 05:00 on the first day, (4) the block B4 is irradiated during the period from 23:00 to 01:00 on the second day, (5) the block B5 is irradiated during the period from 01:00 to 03:00 on the second day, and (6) the block B6 is irradiated during the period from 03:00 to 05:00 on the second day. After the third day, the process from (1) to (6) is repeated.

The light emitting diodes D1f to Dnf are used for 2-hour irradiation of the individual blocks B1 to B6. When the irradiation intensity is set according to the type of the plant T and the type of disease, it is possible to reliably obtain a control effect.

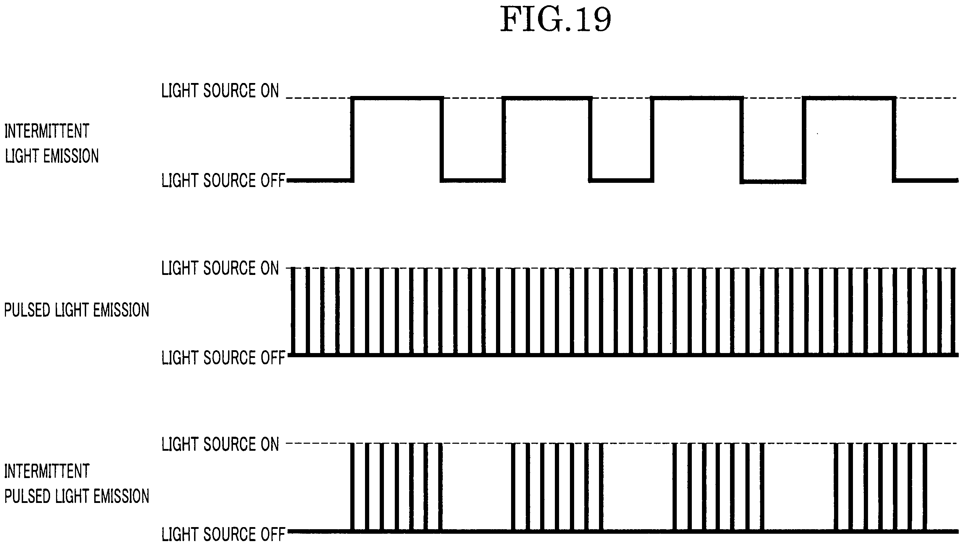

In the present example, 2-hour continuous irradiation is carried out using the light emitting diodes D1f to Dnf. However, as shown in FIG. 19, pulsed or intermittent irradiation may be applied, or pulsed irradiation may be carried out intermittently. Such pulsed irradiation and intermittent irradiation may be carried out according to the type of the plant T or the type of disease.

In the control device 188, it is configured that malfunction in the movement of the holding board 186 and abnormality in light emission of the light emitting diodes D1f to Dnf are displayed in a display (not shown in the drawings), and that irradiation status is displayed in the display.

The merit of having mobile light emitting diodes D1f to Dnf serving as a light source of the control device 188 as described above is that it is not necessary to install light source equipment for irradiating the entire culture surface at once. Accordingly, the facility costs can be reduced. For example, in the case of irradiation at the rate of 1 time/ 3 days, light-source equipment having an area that is 1/3 of the whole area is sufficient. Therefore, according to the above mobile control device 188, it is possible to reduce light-source equipment costs especially in a large-scale facility.

In the application example in FIG. 18A and FIG. 18B, the light source of green light is suspended from the ceiling. However, the light source may be installed in a floor rail mobile system as long as it can move on the upper surface of the culture. Furthermore, a method in which a light source is fixed while a culture shelf or a culture bed is mobile may be applicable.

In the control device 188, it is configured to perform setting of irradiation time zones (irradiation time) in a day, selection of blocks B1 to B6 to be irradiated in each of the irradiation time zones, setting of irradiation light intensity (photon level) in each of the irradiation time zones, setting of pulse intervals of the light source in each of the irradiation time zones, setting of an interval in intermittent irradiation in each of the irradiation time zones, and the like by operation of an operating part 182. In addition, switching between an automatic operation mode and a manual operation mode is possible.

Furthermore, by operating the operating part 182, it is possible to re-set contents of control by re-writing the control program in the memory. Furthermore, if the type of plant and the type of disease are input by operating the operating part 182, it is also possible to perform setting of irradiation time zones

(time period) in a day which are suitable for the type of the plant and the type of disease, selection of the blocks B1 to B6 to be irradiated in each of the time zones, setting of irradiation light intensity (photon level) in each of the irradiation time zones, setting of pulse intervals of the light source in each of the irradiation time zones, and setting of an intervals in intermittent irradiation in each of the irradiation time zones.

By detaching the holding board 186 from the rail 183, in the case where, during the day, the plant T is not irradiated with the light emitting diodes D1f to Dnf, and the plant T is exposed to white light, such as solar light, the seedling-raising surface or the culture surface is not blocked from the light.

An LED is used as the light source of green light in the drawings; however, a fluorescent lamp, HID (high-intensity discharge lamp), or the like may also be used.

### Industrial Applicability

According to the present invention, disease resistance in a plant is enhanced by irradiating the plant with a light beam. Therefore, it is possible to greatly reduce an amount of pesticide agents to be used, and to prevent environmental contamination without causing adverse effects on the human body.

## Claims

1. A method for inducing an expression of a disease-resistant gene of a plant, the method comprising:
irradiating the plant with a light beam having a green wavelength region,
**characterized in that**
the irradiation with the light beam is a pulsed irradiation at an irradiation interval of 0.5 to 5 seconds,
a period of time for irradiation with the light beam is 1 to 3 hours, and
a light intensity of the light beam is from 30 to 120 µmol/m²/s.

2. The method according to claim 1, wherein the disease-resistant gene is at least one selected from the group consisting of an allene oxide synthase (AOS) gene, a lipoxygenase (LOX) gene, and a chitinase gene.

3. The method according to claim 1 or 2, wherein a photon level and a period of time for irradiation with the light beam are determined by a type of plant and a type of disease.

4. The method according to claim 1, wherein a photon level of the light beam, a period of time for irradiation with the light beam, and an intermittence interval of the light beam are determined by a type of plant and a type of disease.

5. The method according to claim 1, wherein a photon level of the light beam, a period of time for irradiation with the light beam, and a pulse interval of the light beam are determined by a type of plant and a type of disease.

## Patentansprüche

1. Verfahren zum Führen einer Expression eines krankheitsresistenten Gens einer Pflanze, welches Verfahren aufweist:
Bestrahlen der Pflanze mit einem Lichtstrahl mit einem grünen Wellenlängenbereich,
**dadurch gekennzeichnet, dass**
die Bestrahlung mit dem Lichtstrahl eine gepulste Bestrahlung mit einem Bestrahlungsintervall von 0,5 bis 5 Sekunden ist,
eine Zeitperiode für die Bestrahlung mit dem Lichtstrahl 1 bis 3 Stunden beträgt, und
eine Lichtintensität des Lichtstrahls von 30 bis 120 µmol/m²/s beträgt.

2. Verfahren nach Anspruch 1, bei dem das krankheitsresistente Gen zumindest eines ist, das ausgewählt ist aus der Gruppe bestehend aus einem Allenoxidsynthase(AOS)-Gen, einem Lipoxygenase(LOX)-Gen und einem Chitinase-Gen.

3. Verfahren nach Anspruch 1 oder 2, bei dem ein Photonenpegel und eine Zeitperiode für die Bestrahlung mit dem Lichtstrahl durch einen Pflanzentyp und einen Krankheitstyp bestimmt werden.

4. Verfahren nach Anspruch 1, bei dem ein Photonenpegel des Lichtstrahls, eine Zeitperiode für die Bestrahlung mit dem Lichtstrahl und ein intermittierendes Intervall des Lichtstrahls durch einen Pflanzentyp und einen Krankheitstyp bestimmt werden.

5. Verfahren nach Anspruch 1, bei dem ein Photonenpegel des Lichtstrahls, eine Zeitperiode für die Bestrahlung mit dem Lichtstrahl und ein Impulsintervall des Lichtstrahls durch einen Pflanzentyp und einen Krankheitstyp bestimmt werden.

## Revendications

1. Procédé pour induire une expression d'un gène résistant à une maladie d'une plante, le procédé comprenant :
l'irradiation de la plante avec un faisceau lumineux qui présente une région de longueurs d'onde vertes ;
**caractérisé en ce que** :
l'irradiation à l'aide du faisceau lumineux est une irradiation pulsée selon un intervalle d'irradiation de 0,5 à 5 seconde(s) ;
une période temporelle pour une irradiation à l'aide du faisceau lumineux va de 1 à 3 heure(s) ; et
une intensité lumineuse du faisceau lumineux va de 30 à 120 µmol/m²/s.

2. Procédé selon la revendication 1, dans lequel le gène résistant à une maladie est au moins un gène sélectionné parmi le groupe qui est constitué par un gène allène oxyde synthase (AOS), un gène lipoxygénase (LOX) et un gène chitinase.

3. Procédé selon la revendication 1 ou 2, dans lequel un niveau de photons et une période temporelle pour l'irradiation à l'aide du faisceau lumineux sont déterminés par un type de plante et par un type de maladie.

4. Procédé selon la revendication 1, dans lequel un niveau de photons du faisceau lumineux, une période temporelle pour l'irradiation à l'aide du faisceau lumineux et un intervalle d'intermittence du faisceau lumineux sont déterminés par un type de plante et par un type de maladie.

5. Procédé selon la revendication 1, dans lequel un niveau de photons du faisceau lumineux, une période temporelle pour l'irradiation à l'aide du faisceau lumineux et un intervalle d'impulsions du faisceau lumineux sont déterminés par un type de plante et par un type de maladie.
